(19) Europäisches Patentamt
European Patent Office
Office européen des brevets

(11) Numéro de publication: **0 593 352 B1**

(12) **FASCICULE DE BREVET EUROPEEN**

(45) Date de publication du fascicule du brevet: **20.12.95**

(51) Int. Cl.$^{6}$: **B09B 3/00**, C02F 11/00, C22B 7/00

(21) Numéro de dépôt: **93402503.2**

(22) Date de dépôt: **11.10.93**

# (54) Procédé de décontamination des sols pollués par des métaux lourds

(30) Priorité: **12.10.92 FR 9212124**

(43) Date de publication de la demande:
**20.04.94 Bulletin 94/16**

(45) Mention de la délivrance du brevet:
**20.12.95 Bulletin 95/51**

(84) Etats contractants désignés:
**AT BE CH DE DK ES FR GB IT LI NL PT SE**

(56) Documents cités:
**DE-A- 3 821 242**
**US-A- 4 465 402**
**US-A- 4 888 053**

**H2O , Vol. 11 ,1983 Delft University of Technology , NL ,**

**JAPANESE PATENTS GAZETTE Section Ch, Week A05, 13 Mars 1978 Derwent Publications Ltd., London, GB; Class M, Page 19, AN 09517A/05 & JP-A-52 152 803 (OSAKA PREFECTURE) 19 Décembre 1977**

(73) Titulaire: **ELF AQUITAINE PRODUCTION**
**Tour Elf**
**2 Place de la Coupole**
**La Défense 6**
**F-92400 Courbevoie (FR)**

(72) Inventeur: **Rambeau, Odile**
**15, rue Jean Maumus**
**F-65430 Soues (FR)**
Inventeur: **Martin, Guy**
**34, rue des Lauriers**
**F-35510 Cesson Sevegne (FR)**
Inventeur: **Guillerme, Michel**
**La Palmeraie,**
**Avenue Georges Pompidou**
**F-31800 Saint-Gaudens (FR)**

(74) Mandataire: **Ohresser, François**
**ELF AQUITAINE PRODUCTION,**
**Tour Elf - 2 Place de la Coupole,**
**La Défense 6**
**F-92400 Courbevoie (FR)**



Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

CHEMICAL ABSTRACTS, vol. 115, no. 2, 15 Juillet 1991, Columbus, Ohio, US; abstract no. 12811w, L. DENG 'Leaching of zinc from ores or industrial sludges for recovery by cathodic deposition' page 251 ;

JAPANESE PATENTS GAZETTE Section Ch, Week Y30, 5 Septembre 1977 Derwent Publications Ltd., London, GB; Class J, Page 10, AN 53368Y/30 & JP-A-52 072 368 (CHIYODA CHEM. ENG. CO.) 16 Juin 1977

## Description

La présente invention a pour objet un procédé de décontamination des sols pollués par des métaux lourds par traitement avec du chlorure d'ammonium.

Toutes les activités industrielles, chimiques, textiles, phytosanitaires, entraînent la production de déchets contenant des composés de métaux lourds. Ces derniers contaminent les sols soit dans des décharges, soit par suite d'un transport dans le sol par les eaux, soit par suite d'un dépôt dû à des retombées atmosphériques.

Il convient donc de réhabiliter les zones contaminées et éviter la migration des métaux toxiques vers d'autres zones.

Pour ce faire différentes méthodes ont été utilisées:
- la vitrification du sol contenant les métaux lourds,
- la complexation entraînant la fixation des métaux lourds dans le sol; un exemple de complexation des métaux du sol est décrit dans le brevet U.S. N° 5.028.252 du 2 juillet 1991.
- l'extraction, opération généralement faite soit par lessivage du sol avec des solutions appropriées suivi d'une récupération des solutions chargées en métaux lourds, soit par excavation du sol et traitement du sol dans des installations appropriées avec des solutions convenant pour ce traitement ou avec des résines échangeuses d'ions.

Les deux premières méthodes ont l'inconvénient de maintenir en place les métaux et donc de laisser subsister un risque de migration des métaux lourds dans le cas où les conditions physicochimiques du milieu qui les contient viendraient à changer.

Les principales techniques d'extraction connues utilisent des acides en mélange avec certains sels par exemple des acides citrique, phosphorique, chlorhydrique, etc...,en mélange avec des sels d'ammonium ou des sels d'amines (chlorhydrate d'hydroxylamine) ou des produits plus élaborés comme l'acide éthylène diamine tétracétique et ses sels.

Un traitement de ce type est décrit par G.L.M VAN HOEK, P.J.F GOMMERS, J.A.S OVERWATER ; Delft University of Technology dans $H_2O$ 11 257 (1983).

Ce traitement a pour objet d'extraire les métaux lourds contenus dans des sédiments pollués. L'extraction est réalisée au moyen d'une résine échangeuse d'ions (résine sodique). Les auteurs décrivent l'influence de l'addition au milieu d'acides ou de sels d'ammonium sur les performances d'extraction, en insistant sur le rôle essentiel joué par la résine.

La demande de brevet allemand 3 821 242 (CELI) décrit un traitement d'extraction des métaux contenus dans les boues industrielles au moyen de solutions salines à base de chlorure d'ammonium, ainsi que le dispositif de mise en oeuvre du traitement.

Les méthodes utilisées à ce jour présentent plusieurs inconvénients. Les produits utilisés sont difficiles à manipuler ou chers. Les traitements risquent de laisser le terrain inapte à certaines utilisations sans traitement complémentaire complexe et onéreux. Les traitements par vitrification ou complexation risquent de voir les conditions physicochimiques du sol modifiées entraînant une déstabilisation des composés de métaux lourds et leur migration.

L'invention propose un procédé permettant d'assurer à la fois l'extraction des métaux lourds des sols, et la réhabilitation des sols qui les rend compatibles avec une activité agricole, procédé susceptible d'être mis en oeuvre à température ambiante c'est-à-dire sans avoir à chauffer le milieu à traiter.

L'invention a pour objet un procédé de décontamination de sols pollués par des métaux lourds tels que le cadmium, le chrome, le cuivre, le mercure, le nickel, le zinc, par traitement du sol au moyen d'au moins une solution contenant du chlorure d'ammonium et une base minérale, solution ayant un pH supérieur à 7 et une concentration minimale en chlorure d'ammonium de 1 mol/l, puis récupération de solutions enrichies en métaux lourds.

Ces solutions ont une concentration molaire au moins égale à 1 mol/l et de préférence une concentration comprise entre 3 et 5 mol/l.

Pour le traitement d'extraction de certains métaux il est nécessaire de travailler avec une solution légèrement basique ayant un pH supérieur ou égal à 7 généralement compris entre 8 et 10 et de préférence entre 8 et 9. Dans ce but il faut ajouter à la solution de chlorure d'ammonium la quantité convenable d'une base minérale. Naturellement, dans ce cas, on choisira de préférence l'ammoniaque.

Dans une variante du procédé on mettra en oeuvre une série de traitements successifs utilisant des solutions de compositions différentes. On pourra à cet effet utiliser par exemple des solutions à concentration variable en chlorure d'ammonium. On pourra aussi utiliser des solutions contenant simplement du chlorure d'ammonium puis des solutions additionnées d'ammoniaque et donc à pH plus élevé. Dans cette hypothèse il sera avantageux d'utiliser des solutions successives à pH croissant.

Le procédé objet de la présente invention peut être mis en oeuvre de deux manières différentes:

La première ou procédé in situ, fait appel aux méthodes hydrologiques classiques. Le principe consiste à laver le sol avec la solution (ou la série de solutions) "extractante", le flux d'injection étant optimisé en fonction du débit maximum que la perméabilité du sol peut permettre. L'ajout d'un tensioactif biodégradable à la solution permet parfois l'amélioration du lessivage

La technique précise de lessivage du sol et de récupération de solutions chargées après lessivage dépendra des conditions géologiques du terrain. On pourra par exemple envisager les quatre cas ci-après:

1. Si la nappe phréatique est captive avec un plafond étanche, il est possible d'injecter des solutions ammoniaquées dans la zone insaturée située au-dessus du plafond et récupérer les fluides par pompage depuis la surface.
2. Si la nappe phréatique n'est pas captive, et la pollution éloignée du toit, une percolation avec récupération par pompage ou drainage sera effectuée. On veillera soigneusement à ce qu'il n'y ait pas ou peu d'apport d'eau en provenance de la nappe phréatique.
3. La couche polluée est proche du toit de la nappe, il est alors nécessaire de mettre en place un système de barrage hydraulique, permettant d'isoler la zone à dépolluer. La procédure opératoire suivante sera similaire à celle mise en oeuvre en 2 ci-dessus.
4. La couche contaminée est superficielle, la surface à traiter est arrosée, la récupération étant assurée par l'intermédiaire de drains, fossés drainants, etc.

La seconde, ou procédé ex situ, fait appel à l'excavation du sol et le traitement hors zone contaminée du sol.

La zone contaminée est excavée. La terre à traiter est placée dans des réacteurs spéciaux. La solution ammoniaquée circule dans ces réacteurs de bas en haut et est récupérée par trop plein à la partie supérieure du réacteur. Cette solution peut être recyclée, utilisée en cascade et partiellement épurée.

L'opération de décontamination peut être continue ou séquentielle. Elle peut utiliser différents types de solutions. Celles-ci peuvent avoir différentes concentrations selon le type du traitement à effectuer.

Les conditions opératoires du procédé dépendront du pH du sol et des métaux à éliminer. Les séquences d'utilisation des solutions nécessaires pour le traitement seront définies d'une façon très précise car elles dépendent du type de solutions utilisées et du type de métaux à déplacer.

Le procédé de l'invention peut être mis en oeuvre seul ou en combinaison séquentielle avec d'autres traitements connus d'extraction des métaux tels que par exemple l'extraction par des solutions acides organiques.

L'utilisation des solutions de chlorure d'ammonium selon l'invention couplées avec des solutions d'acides organiques par exemple : acide citrique, acétique ou de produits complexants est possible. Toutefois, le procédé de l'invention tout en étant compatible avec ce type de traitement exige un ordre d'emploi des solutions précis et l'ordre d'association doit être respecté sous peine de voir le rendement d'extraction spécifique à certains métaux décroître. Par exemple, il est préférable d'utiliser les solutions "citriques" après les solutions ammoniaquées, dans le cas où le sol contient une proportion importante de Cadmium.

La concentration des solutions sera optimisée (ainsi que la séquence d'utilisation) en fonction de la nature du sol, des métaux à déplacer et du pH du sol qu'il convient d'obtenir en fin de décontamination.

Les traitements des liqueurs chargées en métaux lourds après décontamination seront basés sur la suite des opérations classiques suivantes:

- évaporation (plusieurs étages),
- égouttage,
- précipitation des métaux.

La précipitation peut, par exemple, se faire en utilisant la forme carbonatée des métaux.

La solution aqueuse purifiée obtenue sera recyclée après reconditionnement et ajustement.

L'application du procédé a montré au travers des différents essais qu'il était possible de traiter des sols pouvant contenir plus de 100 grammes de métal par kg de sol sec. Le rendement du déplacement de chaque métal est variable et fonction de la nature du métal à déplacer. On peut atteindre des taux de décontamination de l'ordre de 80%. Ainsi un sol contenant 13g de cuivre/kg de sol sec a pu être décontaminé à 80%.

Le procédé de l'invention permet la régénération du sol à des fins agricoles. En effet l'enrichissement du sol en ammonium entraîné par sa mise en oeuvre n'est pas supérieur à celui qu'apportent les méthodes d'enrichissement en ion ammonium à l'aide d'engrais.

Le procédé de l'invention sera mieux compris à la lecture des exemples de mise en oeuvre donnés à titre d'illustration non limitative.

EXEMPLES 1 à 4

Ces exemples illustrent le traitement par du chlorure d'ammonium ($NH_4Cl$) d'un sol pollué par du cuivre uniquement.

Le mode opératoire suivant a été utilisé.

Dans un réacteur on introduit 600g de sol sec pollué par 13,5g de cuivre par kg de sol sec, puis deux litres d'une solution de $NH_4Cl$ de concentration variant de 0,1 à 5 mol/l selon l'essai. On agite le mélange pendant 24 heures à température ambiante. Pour mesurer l'efficacité de l'extraction du métal on effectue des prélèvements périodiques d'échantillons de la phase liquide, le cuivre contenu dans ces échantillons liquides est mesuré par absorption atomique.

Le tableau 1 suivant donne les résultats d'extraction obtenus.

TABLEAU 1

| EXEMPLE | 1 | 2 | 3 | 4 |
|---|---|---|---|---|
| Solutions d'extraction | 0,1M $NH_4Cl$ | 1M $NH_4Cl$ | 3M $NH_4Cl$ | 5M $NH_4Cl$ |
| %Cuivre extrait | 3 | 20 | 80 | 85 |

Ils montrent que pour avoir un bon rendement d'extraction, il est nécessaire d'utiliser des solutions concentrées de chlorure d'ammonium.

EXEMPLES 5 à 7

Le même mode opératoire et les mêmes méthodes d'analyse que dans les exemples 1 à 4 sont utilisés. Toutefois le sol utilisé est un sol argilocalcaire dont la teneur en métaux par kg de sol sec est la suivante : Cuivre 0,5g/kg, Cadmium 10mg/kg, Zinc 1,5g/kg, Chrome 1g/kg, Ni 0,3g/kg.

Au lieu d'utiliser des solutions de $NH_4Cl$ à diverses concentrations on utilise une solution de $NH_4Cl$ 3 mol/l seule ou additionnée d'ammoniaque de sorte que le pH de la solution soit égal à 8 ou 9.

Le tableau 2 donne le taux d'extraction obtenu.

TABLEAU 2

| Exemple | %métaux<br>Solution extraits<br>Traitante | Cadmium | Chrome | Cuivre | Nickel | Zinc |
|---|---|---|---|---|---|---|
| 5 | $NH_4Cl$ 3M seule | 80 | 0 | 20 | 5 | 15 |
| 6 | $NH_4Cl$ 3M + $NH_4OH$ pH=8 | 60 | 0 | 35 | 8 | 20 |
| 7 | $NH_4Cl$ 3M + $NH_40H$ pH=9 | 70 | 10 | 70 | 55 | 65 |
| 8 | $NH_4Cl$ 3M<br>+<br>$NH_4Cl$ 3M + $NH_4OH$ pH=9 | 90 | 25 | 100 | 70 | 85 |
| 9 | $NH_4Cl$ 3M + Na OHpH=9 | 75 | 2 | 75 | 25 | 45 |

Ces résultats montrent l'intérêt d'utiliser des solutions de chlorure d'ammonium additionnées d'ammoniaque, notamment de façon à obtenir un pH 9 du milieu.

EXEMPLE 8

Dans un réacteur on introduit 600g du même sol que celui utilisé dans les exemples 5 à 7, on ajoute 2 litres d'une solution de $NH_4Cl$ 3 mol/l et on fait réagir avec agitation pendant 24 heures à température ambiante. A la fin de cette première phase on soutire tout le liquide et on introduit 2 litres d'une solution de $NH_4Cl$ 3 mol/l additionnée d'ammoniaque, dont le pH est 9. On agite et laisse réagir pendant 24 heures. Le résultat de cet essai est indiqué dans le tableau 2. Il permet de constater que le séquençage de deux solutions de $NH_4Cl$ 3 mol/l seule, puis additionnée d'ammoniaque permet d'améliorer le taux

EXEMPLE 9

L'exemple 8 est repris dans les mêmes conditions à l'exception de la base minérale, l'ammoniaque étant remplacée par la soude.

Les résultats obtenus montrent que si les performances sont inférieures à celles des exemples utilisant l'ammoniaque elles sont largement supérieures à celles de l'exemple 5 où la solution non alcalinisée est à un pH inférieur à 7.

EXEMPLES 10 et 11

Dans l'exemple 10 on introduit dans un réacteur 600g du même sol que celui utilisé dans les exemples 5 à 7, on ajoute 2 litres d'une solution d'acide citrique ayant une concentration 0,1 mol/l. On laisse réagir pendant 24 heures en agitant à température ambiante.

A la fin de cette première extraction le liquide est soutiré et on introduit deux litres d'une solution de chlorure d'ammonium 3 mol/l additionnée d'ammoniaque de façon à ce que le pH soit 9. On laisse réagir pendant 24 heures à température ambiante.

Pour l'exemple 11 le même mode opératoire est utilisé avec pour différence d'inverser l'ordre de deux extractions.

Les résultats obtenus sont donnés dans le tableau 3.

TABLEAU 3

| Exemple | Solution %métaux extraits Traitement | Cadmium | Chrome | Cuivre | Nickel | Zinc |
|---|---|---|---|---|---|---|
| 10 | acide citrique 0,1M<br>$NH_4Cl$ 3M /$NH_4OH$-pH9 | 10 | 100 | 100 | 70 | 70 |
| 11 | $NH_4Cl$ 3M/$NH_4OH$-pH9<br>+<br>acide citrique 0,1M | 100 | 90 | 100 | 80 | 90 |

Ils montrent l'importance de l'ordre de la mise en oeuvre du procédé objet de l'invention et d'un procédé d'extraction anionique lorsqu'il sont utilisés en combinaison. Les exemples 10 et 11 montrent qu'il est parfois préférable d'utiliser la solution d'acide citrique parfois préférable d'utiliser la solution d'acide citrique dans la deuxième phase du traitement. Ils montrent également la compatibilité du procédé avec des procédés d'extraction anionique.

## Revendications

1. Procédé de décontamination de sols pollués par des métaux lourds tels que le cadmium, le chrome, le cuivre, le mercure, le nickel, le zinc, par traitement du sol au moyen d'au moins une solution contenant du chlorure d'ammonium et une base minérale, solution ayant un pH supérieur à 7 et une concentration minimale en chlorure d'ammonium de 1 mol/l, puis récupération de solutions enrichies en métaux lourds.

2. Procédé selon la revendication 1 caractérisé en ce qu'on utilise des solutions dont la concentration en chlorure d'ammonium est comprise entre 3 et 5 mol/l.

3. Procédé selon l'une des revendications 1 et 2 caractérisé en ce que le pH des solutions est compris entre 8 et 10 et de préférence entre 8 et 9.

4. Procédé selon l'une de revendications 1 et 2 caractérisé en ce qu'on utilise comme base minérale l'ammoniaque.

5. Procédé selon l'une des revendications 1 à 4 caractérisé en ce qu'on opère en une série de traitements successifs avec au moins une solution contenant du chlorure d'ammonium puis avec les solutions contenant chlorure d'ammonium et ammoniaque.

6. Procédé selon l'une des revendications 1 à 4 caractérisé en ce qu'on le combine avec un traitement complémentaire préalable d'extraction de métaux lourds à l' aide de solutions acides organiques.

7. Procédé selon l'une des revendications 1 à 4 caractérisé en ce qu'on le combine avec un traitement complémentaire d'extraction de métaux lourds à l'aide de solutions acides.

8. Procédé selon l'une des revendications 1 à 7 caractérisé en ce qu'il est mis en oeuvre par lessivage du sol au moyen des solutions et récupération par drainage ou pompage de ces solutions chargées en métaux lourds qui sont ultérieurement traitées par une technique de séparation classique.

9. Procédé selon l'une des revendications 1 à 7 caractérisé en ce qu'il est mis en oeuvre par excavation du sol contaminé, traitement de celui-ci en réacteur au moyen d'au moins une solution, séparation des solutions chargées en métaux lourds et remise en place du sol dépollué.

## Claims

1. Process for decontaminating soil polluted with heavy metals, such as cadmium, chromium, copper, mercury, nickel and zinc, by treating the soil with at least one solution containing ammonium chloride and a mineral base, the solution having a pH greater than 7 and a minimum concentration of ammonium chloride of 1 mole/l, and then recovering solutions enriched with heavy metals.

2. Process according to Claim 1, characterised in that solutions of which the concentration of ammonium chloride is from 3 to 5 mole/l are used.

3. Process according to either Claim 1 or Claim 2, characterised in that the pH of the solutions is between 8 and 10 and preferably between 8 and 9.

4. Process according to either Claim 1 or Claim 2, characterised in that ammonium hydroxide is used as the mineral base.

5. Process according to any one of Claims 1 to 4, characterised in that the operation is carried out in a series of successive treatments with at least one solution containing ammonium chloride and then with solutions containing ammonium chloride and ammonium hydroxide.

6. Process according to any one of Claims 1 to 4, characterised in that it is combined with a preliminary complementary treatment for extracting heavy metals by means of organic acid solutions.

7. Process according to any one of Claims 1 to 4, characterised in that it is combined with a complementary treatment for extracting heavy metals by means of acid solutions.

8. Process according to any one of Claims 1 to 7, characterised in that it is carried out by leaching the soil by means of the solutions and recovering, by drainage or pumping, these solutions charged with heavy metals which are later treated by a customary separation technique.

9. Process according to any one of Claims 1 to 7, characterised in that it is carried out by excavating the contaminated soil, treating the latter in a reaction vessel by means of at least one solution, separating the solutions charged with heavy metals and returning the de-polluted soil to its place.

**Patentansprüche**

1. Verfahren zur Dekontamination von durch Schwermetalle wie Kadmium, Chrom, Kupfer, Quecksilber, Nickel und Zink kontaminierten Böden durch Behandlung des Bodens mit wenigstens einer Ammoniumchlorid und eine anorganische Base enthaltenden Lösung, die einen pH von über 7 und eine Mindestkonzentration an Ammoniumchlorid von 1 Mol/l aufweist, und nachfolgende Abtrennung der mit Schwermetallen angereicherten Lösung.

2. Verfahren nach Anspruch 1, dadurch **gekennzeichnet,** daß man Lösungen verwendet, deren Ammoniumchloridkonzentration zwischen 3 und 5 Mol/l liegt.

3. Verfahren nach einem der Ansprüche 1 und 2, dadurch **gekennzeichnet,** daß der pH der Lösungen zwischen 8 und 10 und vorzugsweise zwischen 8 und 9 liegt.

4. Verfahren nach einem der Ansprüche 1 und 2, dadurch **gekennzeichnet,** daß man als anorganische Base Ammoniak verwendet.

5. Verfahren nach einem der Ansprüche 1 bis 4, dadurch **gekennzeichnet,** daß man nacheinander zuerst mit wenigstens einer Ammoniumchlorid enthaltenden Lösung und dann mit den Ammoniumchlorid und Ammoniak enthaltenden Lösungen behandelt.

6. Verfahren nach einem der Ansprüche 1 bis 4, dadurch **gekennzeichnet,** daß man es mit einer vorgängigen zusätzlichen Behandlung der Schwermetallextraktion mit Hilfe von organischen sauren Lösungen kombiniert.

7. Verfahren nach einem der Ansprüche 1 bis 4, dadurch **gekennzeichnet,** daß man es mit einer vorgängigen zusätzlichen Behandlung der Schwermetallextraktion mit Hilfe saurer Lösungen kombiniert.

8. Verfahren nach einem der Ansprüche 1 bis 7, dadurch **gekennzeichnet,** daß es durch Auslaugen des Bodens mit Hilfe der Lösungen und Abtrennung durch Drainage oder Pumpen dieser mit Schwermetallen beladenen Lösungen, die schließlich nach einem klassischen Trennverfahren behandelt werden, durchgeführt wird.

9. Verfahren nach einem der Ansprüche 1 bis 7, dadurch **gekennzeichnet,** daß es durch Ausbaggern des kontaminierten Bodens, dessen Behandlung im Reaktor mit wenigstens einer Lösung, Abtrennung der mit Schwermetallen angereicherten Lösungen und Rückführung des dekontaminierten Bodens an die frühere Stelle durchgeführt wird.